# EUROPÄISCHE PATENTSCHRIFT

(11) **EP 0 985 579 B1**
(45) Veröffentlichungstag und Bekanntmachung des Hinweises auf die Patenterteilung: **26.05.2004**
(21) Anmeldenummer: 99117857.5
(22) Anmeldetag: 10.09.1999
(51) Int. Cl.: B60R 1/06, B60R 1/07

(54) **Elektrischer Aussenrückspiegel**
Electrical rear view mirror
Rétroviseur extérieur électrique

(30) Priorität: 11.09.1998 DE 19841551
(43) Veröffentlichungstag der Anmeldung: 15.03.2000
(73) Patentinhaber: Donnelly Hohe GmbH & Co. KG, 97903 Collenberg (DE)
(72) Erfinder: Polzer, Herwig, 63879 Miltenberg (DE)
(74) Vertreter: Böck, Bernhard, Dipl.-Ing.

(56) Entgegenhaltungen:
- EP-A- 0 476 600
- WO-A-90/10555
- DE-A- 3 106 792
- DE-A- 4 422 572
- DE-C- 19 724 725
- DE-U- 29 620 775
- DE-U- 29 810 522

## Beschreibung

Die Erfindung betrifft einen Außenrückspiegel für ein Kraftfahrzeug, der beispielsweise im Bereich eines Seitenfensters, einer Seitentür oder einem Kotflügel angeordnet ist, nach dem Oberbegriff des Patentanspruchs 1.

Außenrückspiegel dieser Art werden in einer Vielzahl von Ausführungsformen im Kraftfahrzeugbau eingesetzt. Neben der Glasbaugruppe, in deren Spiegelfläche der Fahrer den nachfolgenden Verkehr beobachten kann, weisen diese Außenrückspiegel zumindest ein elektrisches Funktionselement auf. Als elektrische Funktionselemente werden dabei alle Baugruppen bezeichnet, die zur richtigen Funktion mit elektrischer Spannung aus dem Bordnetz des Fahrzeuges, beispielsweise aus der Fahrzeugbatterie oder der Zündanlage des Fahrzeugs, welches typischerweise eine Nennspannung von 12 Volt oder in Zukunft 42 Volt aufweist, versorgt werden müssen. Beispielsweise kann es auch erforderlich sein, ein elektro-optische reflektierendes Element, wie zum Beispiel ein reflektierendes Elektro-Chrom-Element im Außenrückspiegel, t mit dem Innenrückspiegel (oder einem anderen Fahrzeugteil) elektrisch zu verbinden, wozu zusätzliche elektrische Leitungsverbindungen mit dem Fahrzeuginneren erforderlich sind. Besonders häufig, jedoch keineswegs ausschließlich, werden elektrische Verstellantriebe zur Einstellung der Glasbaugruppe und/oder Beleuchtungseinrichtungen und/oder Beiklappantriebe und/oder Heizelemente in derartige Außenrückspiegel eingebaut. Weitere elektrische Funktionselemente die in den Außenrückspiegel eingebaut werden können sind Signaleinrichtungen, wie beispielsweise Blinker, Bremslichter, Begrenzungsleuchten und Standlichter. Auch Sensoren die in den Außenrückspiegel eingebaut werden, beispielsweise Thermofühler, Näherungssensoren, Sensoren für Gebührenzahlungssysteme, Detektoren für den toten Winkel, Mobiltelefonantennen, Radarsensoren, Funkempfangseinrichtungen und/oder GPS-Antennensysteme, sind als elektrische Funktionselemente im Sinne dieser Erfindung zu verstehen.

Zur mechanischen Befestigung der einzelnen elektrischen Funktionselemente im Außenrückspiegel weist dieser zumindest ein Trägerelement auf. Das Trägerelement seinerseits ist unmittelbar oder mittelbar, beispielsweise über ein Dreh- oder Kippgelenk, welches auch als ein an sich bekanntes angetriebenes Gelenk ausgeführt sein kann, mit einem an ein der Fahrzeugkarosserie befestigten Spiegelfuß verbunden.

Zur Versorgung der elektrischen Funktionselemente im Außenrückspiegel werden Kabelsätze ins Spiegelinnere geführt, so daß die Funktionselemente über Steckverbindungen mit dem elektrischen Bordnetz des Kraftfahrzeugs verbunden werden können.

Nachteilig an der bekannten Verkabelung von Außenrückspiegeln ist es, daß die erforderlichen Kabelsätze mit einem hohen Montageaufwand überwiegend von Hand verlegt werden müssen. Außerdem müssen die Kabelsätze und Steckverbindungen mit einem hohen Aufwand gegen Fehlfunktion verursacht durch Verschleiß, beispielsweise durch Vibrationen und Reibung, oder durch Eindringen von Feuchtigkeit und Kriechwasser geschützt werden.

Aus der DE 296 20 775 U1 ist eine gattungsgemäßer Außenspiegel mit elektrischen Funktionselementen bekannt.

Die DE 44 22 572 A1 beschreibt einen Außenspiegel mit einer Leiterbahnen, die in der Art von flexiblen Kabeln ausgebildet sind. Diese flexiblen Kabellitzen sind jedoch nicht dazu geeignet, ohne weiteres eine elektrisch leitende Verbindung zwischen Bordnetz und Trägerelement herstellen zu können. Vielmehr sind dazu zusätzliche Bauelemente, nämlich Schleifringe erforderlich, die an den flexiblen Kabellitzen angeschlossen sind.

Aufgabe der vorliegenden Erfindung ist es, einen gattungsgemäßen Außenrückspiegel zu liefern, der schnell, einfach und kostengünstig montierbar ist und eine hohe Funktionssicherheit aufweist.

Diese Aufgabe wird durch einen Außenrückspiegel nach der Lehre des Patentanspruchs 1 gelöst.

Bevorzugte Ausführungsformen der Erfindung sind Gegenstand der Unteransprüche.

Gattungsgemäß weist das Trägerelement zumindest eine elektrische Leiterbahn auf, an deren erstes Ende ein elektrisches Funktionselement und an deren zweites Ende ein Leiter anschließbar ist, der eine elektrische Verbindung mit zumindest einer elektrischen Funktionseinrichtung des übrigen Kraftfahrzeugs herstellt. Beispielsweise kann das zweite Ende der Leiterbahn an die Batterie des Fahrzeuges,
an die Zündanlage des Kraftfahrzeugs, an ein elektronisches Bussystem des Fahrzeugs oder an eine andere Fahrzeugkomponente wie beispielsweise ein Innenrückspiegel, eine Türbaugruppe, eine Sitzbaugruppe, ein Mobiltelefonsystem, ein GPS-System oder ähnliches, angeschloßen sein. Somit verbindet zumindest eine elektrische Leiterbahn ein elektrisches Funktionselement im Außenrückspiegel mit einer Signalquelle und/oder Spannungsquelle des Fahrzeugs im Fahrzeuginneren oder einer anderen Stelle im Fahrzeug. Vorzugsweise sollte der Außenrückspiegel so ausgeführt sein, daß, sollte der Außenrückspiegel beispielsweise aufgrund einer unbeabsichtigten Berührung während der Benutzung auf der Straße vom Fahrzeug getrennt werden, die elektrische Verbindung zwischen Außenrückspiegel und elektrischen Funktionselementen des übrigen Fahrzeugs so getrennt wird, daß weder an den elektrischen Leiterbahnen im Außenrückspiegel noch an den elektrischen Leiterbahnen des Fahrzeugs ein Schaden auftritt. Falls die gesamte elektrische Versorgung über die Leiterbahnen erfolgt, sind zumindest zwei Leiterbahnen vorzusehen. Durch die Anbringung derartiger Leiterbahnen am Trägerelement wird eine Vorverkabelung des Außenrückspiegels erreicht.

Bei der Montage des Außenrückspiegels wird dadurch der Anschluß der verschiedenen Funktionselemente an das Bordnetz erleichtert, da die Anschlußpunkte auf dem Trägerelement an definierten Punkten angeordnet sind. Außerdem sind die Leiterbahnen durch die Befestigung auf dem Trägerelement sicher vor Vibrationen geschützt.

Nach einer bevorzugten Ausführungsform der Erfindung ist das erste Ende und/oder das zweite Ende der Leiterbahn als Steckkontakt, insbesondere als Steckzunge, ausgebildet. Die funktionskomplementär ausgebildeten Kontaktierungselemente am Funktionselement und am Bordnetz können dadurch einfach auf die entsprechenden Steckkontakte am Trägerelement aufgesteckt werden, so daß ein elektrisch leitender Kontakt in einem einfachen Montagevorgang herstellbar ist. So kann das Außenrückspiegel beispielsweise eingebettete, starr befestigte elektrische Leiterbahnen aufweisen, die in einen elektrischen Steckkontakt innerhalb des Gehäuses münden. Damit kann ein mit einem Stecker versehenes Funktionselement des Rückspiegels, wie beispielsweise ein elektrischer Verstellantrieb zur Einstellung der Glasbaugruppe, vorzugsweise durch eine schnappverschlußartige Befestigungseinrichtung im Außenrückspiegelgehäuse befestigt und mittels des Steckkontakts im Gehäuse elektrisch verbunden werden. Dies vereinfacht eine "plug and play"-artiges Anbringen von Funktionselementen am Außenrückspiegel.

Die Funktionsfähigkeit der elektrischen Funktionselemente ist insbesondere durch Feuchtigkeit und Kriechwasser gefährdet. Auf Kabeln kann sich beispielsweise ein Feuchtigkeitsfilm bilden, der entlang der Kabelhülse in Steckverbindungen läuft und dadurch Fehlfunktionen auslöst. Um die Funktionssicherheit gattungsgemäßer Außenrückspiegel zu erhöhen, ist es deshalb vorteilhaft, wenn die Leiterbahnen zumindest bereichsweise in den Werkstoff des Trägerelements eingebettet sind. Eine zusätzliche Ummantelung der Leiterbahnen kann in diesen Fällen entfallen, da eine sichere Isolation der Leiterbahnen durch den Werkstoff des Trägerelements, beispielsweise einem im wesentlichen nichtleitenden thermoplastischen Kunststoff, gewährleistet ist. Feuchtigkeit und Kriechwasser kann in derartig eingebettete Bereiche nicht eindringen.

Besonders einfach und kostengünstig ist die Herstellung eines Trägerelements mit eingebetteten Leiterbahnen durch Spritzguß möglich. Die Leiterbahnen werden dabei vor dem Einspritzen des Kunststoffs in an sich bekannter Art in das Formnest eingelegt und mit dem Kunststoff umspritzt, beispielsweise im an sich bekannten "integral-moulding"-Verfahren. Lediglich die Enden der Leiterbahn werden ausgespart, so daß eine elektrisch leitenden Kontaktierung möglich ist.

Das Material, das zur Herstellung der Leiterbahnen eingesetzt wird, ist grundsätzlich beliebig. Vorzugsweise sollten die Leiterbahnen aus einem im wesentlichen biegesteifen Drahtmaterial, beispielsweise einem Messingdraht, hergestellt sein, damit die Leiterbahnen beim Einlegen in das Formnest vor dem Umspritzen mit Kunststoff lediglich an den Enden gehalten werden müssen.

In erster Linie dienen die Leiterbahnen der elektrischen Kontaktierung der Funktionselemente im Außenrückspiegel mit der Zündanlage des Fahrzeugs und/oder zumindest einem anderen elektrischen Funktionselement im Fahrzeuginneren und/oder mit zumindest einer Signalquelle eines Funktionseinrichtung im Fahrzeuginnenraum oder dem übrigen Fahrzeug. Nach einer bevorzugten Ausführungsform der Erfindung weist die Leiterbahn einen profilierten oder hohlen Leitungsquerschnitt auf. Durch die Profilform der Leiterbahn, beispielsweise in der Art eines Winkel- oder U-Profildrahts oder Hohlprofildrahts, wird eine aussteifende Wirkung durch die Leiterbahn erreicht, so daß bei gleicher mechanischer Festigkeit das Trägerelement entsprechend schwächer gestaltet werden kann, wodurch eine Gewichts- und Materialreduzierung ermöglicht wird.

Alternativ zur Verwendung von biegesteifen Materialien können die Leiterbahn auch aus einem im wesentlichen flexiblen Kabelmaterial hergestellt sein. Beim Umspritzen solcher Kabel oder Kabelsätze müssen die Enden der Kabel und falls erforderlich auch Bereiche zwischen den Enden in der Form an der richtigen Position fixiert werden.

Um den Montageaufwand bei der Verkabelung der verschiedenen Funktionselemente zu reduzieren, ist erfindungsgemäß vorgesehen, dass das elektrische Funktionselement zumindest ein zum ersten Ende einer Leiterbahn funktionskomplementär gestaltetes Kontaktierungselement aufweist, wobei das Kontaktierungselement derart am Funktionselement angeordnet ist, daß bei lagerichtiger Befestigung des Funktionselements am Trägerelement das Kontaktierungselement an der Leiterbahn elektrisch leitend zur Anlage bringbar ist. Mit anderen Worten bedeutet dies, daß eine separate Verkabelung des Funktionselements entfällt. Der elektrische Kontakt wird gleichzeitig mit der mechanischen Befestigung des Funktionselements auf dem Trägerelement hergestellt. Dies kann insbesondere während der Fügebewegung bei der Befestigung des Funktionselements erfolgen, bei der ein entsprechender Steckkontakt des Funktionselements auf ein als Steckzunge ausgebildetes Ende der Leiterbahn aufgeschoben wird. Denkbar ist es auch, das elektrisch leitende Befestigungsmittel, beispielsweise Metallschrauben, zur Herstellung des elektrischen Kontakts zwischen Funktionselement und Leiterbahn eingesetzt werden.

Durch die Verwendung des erfindungsgemäßen Trägerelements kann die elektrische Verkabelung der verschiedenen Funktionselemente im Außenrückspiegel weitgehend vormontiert werden. Es ist deshalb vorteilhaft, wenn die zweiten Enden mehrerer Leiterbahnen, die jeweils an das Bordnetz des Kraftfahrzeugs angeschlossen werden müssen, derart am Trägerelement angeordnet sind, daß die Kontaktierungselemente eines mehrpoligen Steckverbinders jeweils am zweiten Ende einer Leiterbahn zur Anlage bringbar sind. Mit anderen Worten bedeutet dies, daß zum elektrischen Anschluß des Außenrückspiegels an das Bordnetz nach der Montage des Außenrückspiegels lediglich ein mehrpoliger Steckverbinder am Trägerelement angeschlossen werden muß.

Falls die Anbringung eines Kontaktierungselements unmittelbar am Trägerelement, beispielsweise aus Platzgründen, nicht möglich ist, kann an die Leiterbahn ein flexibles Stromkabel angeschlossen werden, wobei die Kontaktstelle zwischen Leiterbahn und Stromkabel in das Material des Trägerelements eingebettet ist. Durch die Einbettung der Kontaktstelle in das Material des Trägerelements ist diese sicher vor Verschleiß und Feuchtigkeit geschützt.

Falls zur Kontaktierung der Leiterbahnen flexible Stromkabel an die Enden der Leiterbahnen angebracht sind, ist es vorteilhaft, wenn mehrere dieser Stromkabel einen Kabelsatz bilden, an dessen Ende ein mehrpoliger Steckverbinder zur Kontaktierung der Stromkabel mit dem Bordnetz angeordnet ist. Im Ergebnis kann somit durch die Kontaktierung eines einzigen Steckverbinders die elektrische Verbindung des gesamten Außenrückspiegels mit dem Bordnetz erfolgen.

Nach einer bevorzugten Ausführungsform der Erfindung ist die Steckverbindung zwischen Bordnetz und Außenrückspiegel in einer Ausnehmung des Spiegelfußes, insbesondere im Verbindungselement des Spiegelfußes, angeordnet.

Der Montageaufwand bei der Verkabelung der elektrischen Funktionselemente im Außenrückspiegel kann auf ein Minimum reduziert werden, wenn die Steckverbindung zwischen Bordnetz und Außenrückspiegel derart ausgebildet ist, daß die funktionskomplementären Kontaktierungselemente von Bordnetz und Außenrückspiegel bei lagerichtiger Befestigung des Außenrückspiegels am Spiegelfuß elektrisch leitend aneinander zur Anlage bringbar sind. Mit anderen Worten bedeutet dies, daß der elektrische Kontakt zwischen den Leiterbahnen des Außenrückspiegel und dem Bordnetz durch eine entsprechende Fügebewegung und/oder entsprechende Befestigungsmittel hergestellt werden kann.

In einer Ausführungsform der Erfindung verbindet jeweils eine Leiterbahn eine Anschlußleitung des Bordnetzes mit einem Anschlußpol an einem Funktionselement. Die Anzahl der erforderlichen Leiterbahnen kann erfindungsgemäß dadurch reduziert werden, daß zumindest eine Leiterbahn verzweigt ausgebildet ist, so daß zumindest zwei Funktionselemente gemeinsam über diese Leiterbahn an das Bordnetz des Kraftfahrzeugs anschließbar sind. Da es im Kraftfahrzeugbau allgemein üblich ist, alle elektrischen Verbraucher an eine gemeinsame Masse anzuschließen, kann beispielsweise der Massekontakt aller elektrischen Funktionselemente im Außenrückspiegel über eine einzige verzweigt ausgebildete Leiterbahn hergestellt werden. Eine verzweigt ausgebildete Leiterbahn kann dabei entweder mehrere Enden aufweisen, an die jeweils ein Funktionselement anschließbar ist, oder es sind Kontaktstellen zwischen den Enden der Leiterbahn vorgesehen, an denen ebenfalls ein Funktionselement anschließbar ist.

Falls die elektrischen Verbraucher des Fahrzeuges mittels einer Multiplex-Signalsteuerung mit intelligenter Elektronik, beispielsweise bei Einsatz eines CAN-BUS-Systems (Controlled Area Network), Steuersignale zu den beiden Außenrückspiegeln senden, sind im erfindungsgemäßen Außenrückspiegel insgesamt zwei oder drei Leiterbahnen ausreichend, die in der Art verzweigt ausgebildet sind, daß jeweils ein Pol eines Funktionselements mit jeweils einer Leiterbahn elektrisch leitend verbunden sind. Die Steuerung der Funktionselemente erfolgt dabei über Steuersignale die auf die Versorgungsspannung aufmoduliert werden und von entsprechenden Empfängereinheiten in den Funktionselementen verarbeitet werden.

Welche Gestaltung das Trägerelement aufweist und ob es eventuell zusätzliche Funktionen des Außenrückspiegels übernimmt, ist erfindungsgemäß gleichgültig und hängt von der Ausbildung des jeweiligen Außenrückspiegels ab. Besonders vorteilhaft ist es, wenn das Trägerelement in der Art eines an sich bekannten zentralen Funktionsträger ausgebildet ist, der am Spiegelfuß befestigbar ist. Solche zentralen Funktionsträger bilden bei einer Vielzahl von Spiegeltypen eine der Hauptkomponenten des Außenrückspiegels. Am zentralen Funktionsträger kann die Glasbaugruppe gelenkig verstellbar gelagert werden. Um die Funktionselemente des Außenrückspiegels nach außen hin abzudecken, kann am zentralen Funktionsträger ein ein- oder mehrteiliges Spiegelgehäuse angebracht werden. Ein Ende des zentralen Funktionsträgers wird mit dem Spiegelfuß, der an der Kraftfahrzeugkarosserie befestigt ist, verbunden, wobei der zentralen Funktionsträger dabei zumeist abklappbar bzw. beiklappbar gelagert ist.

Grundsätzlich ist es genauso möglich das Trägerelement als Teil des Spiegelgehäuses, beispielsweise als Oberteil, oder als Rumpfspiegel auszubilden.

Nachfolgend wird der Außenrückspiegel anhand lediglich bevorzugte Ausführungsformen darstellender Zeichnungen näher erläutert. Es zeigt:
- **Fig. 1**: ein Trägerelement mit verschiedenen elektrischen Funktionselementen in perspektivischer Ansicht;
- **Fig. 2**: das Trägerelement gemäß Fig. 1 in einem gebrochen dargestellten Querschnitt;
- **Fig. 3**: eine Ausführungsform einer Verbindung zwischen einem Trägerelement und einem Spiegelfuß im Längsschnitt.

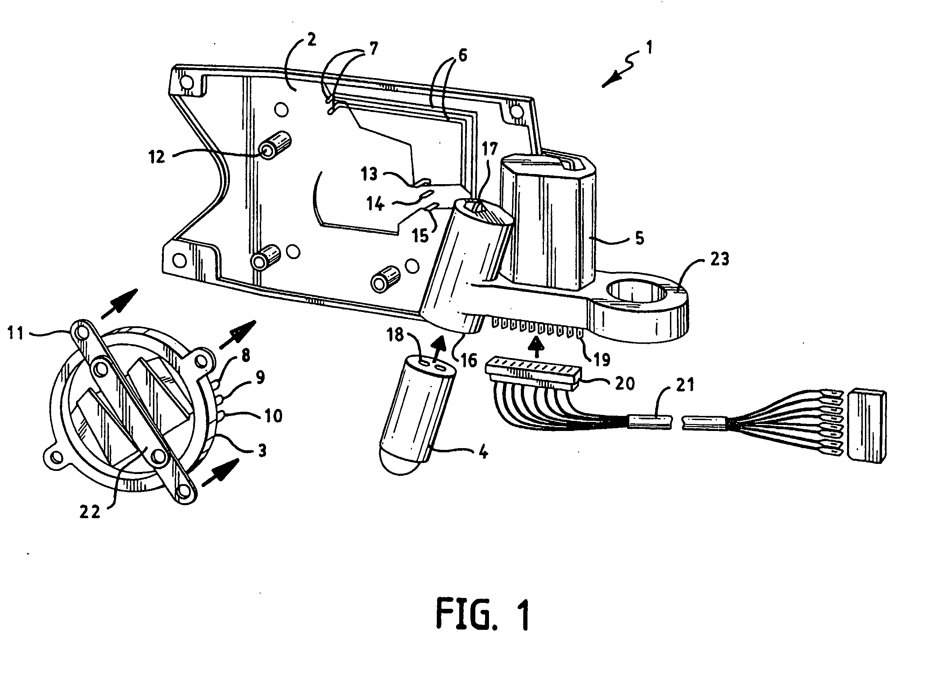

**Fig. 1** zeigt ein als zentralen Funktionsträger 2 ausgebildetes Trägerelement 1, an dem ein elektrischer Verstellantrieb 3, eine Einstiegsleuchte 4 und ein verdeckt dargestellter Beiklappantrieb 5 anbringbar sind. Um die verschiedenen elektrischen Funktionselemente 3, 4 und 5 mit Spannung aus dem Bordnetz versorgen zu können, sind an der Trägerplatte 2 mehrere Leiterbahnen 6 vorgesehen, deren Ende 7 als Steckzungen ausgebildet sind.

Zur Herstellung des zentralen Funktionsträgers 2 werden die verschiedenen Leiterbahnen 6 in ein Formnest eingelegt und mit Kunststoff umspritzt. Zur besseren Erkennbarkeit des Verlaufs der Leiterbahnen 6 ist die obere rechte Ecke des zentralen Funktionsträgers 2 gebrochen dargestellt. Die Leiterbahnen 6 sind aus einem biegesteifen Drahtmaterial hergestellt, und werden beim Umspritzen mit Kunststoff an den Enden 7 in der Form gehalten.

Die Kontaktierungselemente 8, 9 und 10 am Verstellantrieb 3 sind so angeordnet, daß sie während der Montage des Verstellantriebs 3 mit der Befestigung der Haltelaschen 11 an den entsprechenden Vorsprüngen 12 des zentralen Funktionsträgers 2 an den Leiterbahnen 13, 14 und 15 elektrisch leitend zur Anlage kommen. Das heißt, eine Verkabelung des Verstellantriebs 3 ist nicht mehr notwendig, da mit der Fügebewegung während des Anschraubens des Verstellantriebs 3 ein entsprechender Steckkontakt zwischen den einzelnen Kontaktierungselementen 8, 9 und 10, sowie 13, 14 und 15 hergestellt wird.

Gleiches gilt auch für die Einstiegsleuchte 4, die in die Fassung 16 eingesteckt wird, wobei der elektrische Kontakt durch Aufschieben der Steckzungen 17 auf die entsprechenden Steckkontakte 18 hergestellt wird.

Die zweiten Enden 19 der verschiedenen Leiterbahnen 6 sind auf der Unterseite des zentralen Funktionsträgers 2 parallel nebeneinander angeordnet, so daß der mehrpolige Steckverbinder 20, der über dem Kabelbaum 21 mit dem Bordnetz des Kraftfahzeugs verbindbar ist, in einer linearen Fügebewegung einfach aufgesteckt werden kann.

Auf dem Stellglied 22 des Verstellantriebs 3 wird eine nicht dargestellte Glasbaugruppe befestigt, so daß der Reflektionswinkel der Glasbaugruppe auf die Bedürfnisse des Fahrers ferngesteuert einstellbar ist. Mit dem Befestigungsflansch 23 wird der zentralen Funktionsträger 2 an einem nicht dargestellten Spiegelfuß, der mit der Karosserie des Kraftfahrzeugs verbindbar ist, drehbar befestigt. Ein nicht dargestelltes Spiegelgehäuse deckt den zentralen Funktionsträger 2 nach außen hin ab.

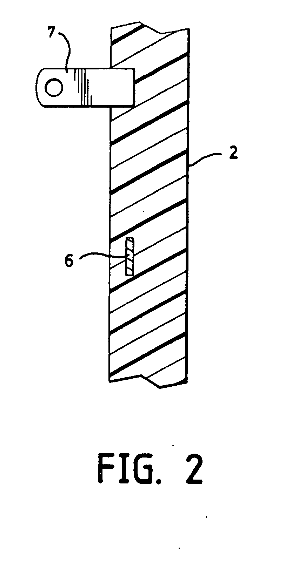

**Fig. 2** zeigt den zentralen Funktionsträger 2 in einem gebrochen dargestellten Querschnitt. Man erkennt, daß die Leiterbahnen 6 vollständig in den Kunststoff des zentralen Funktionsträgers 2 eingebettet sind. Lediglich die als Steckzungen 7 ausgebildeten Enden der Leiterbahnen 6 ragen aus dem Kunststoff des zentralen Funktionsträgers 2 heraus, so daß sie elektrisch kontaktierbar sind.

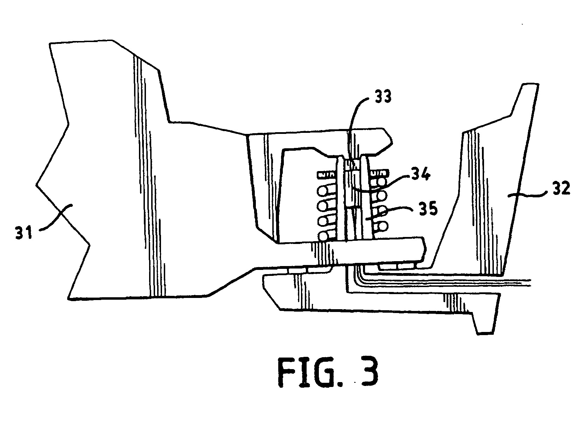

**Fig. 3** zeigt ein Trägerelement 31 und einen Spiegelfuß 32, wobei die Leiterbahnen im Trägerelement 31 wiederum nicht dargestellt sind. Der mehrpolige Steckverbinder 33 am Trägerelement 31 ist derart ausgebildet, daß er bei der linear von oben nach unter gerichteten Fügebewegung zur Befestigung des Trägerelements 31 am Spiegelfuß 32 in der funktionskomplementär ausgebildeten Steckfassung 34 im Verbindungselement 35 zur Anlage kommt. Die Steckfassung 34 ihrerseits ist über die Leitungen 36 mit dem Bordnetz des Kraftfahrzeuges verbunden.

## Patentansprüche

1. Außenrückspiegel eines Kraftfahrzeugs mit einer Glasbaugruppe, zumindest einem elektrischen Funktionselement (3, 4, 5), insbesondere einem Verstellantrieb (3) und/oder einem elektro-optischen Element und /oder einer Beleuchtungseinrichtung (4) und/oder einem Beiklappantrieb (5) und/oder einem Heizelement, und einem Trägerelement (31), an dem das elektrische Funktionselement (3, 4, 5) befestigbar ist, wobei das Trägerelement (31) zumindest eine elektrische Leiterbahn (6) aufweist, an deren erstes Ende ein elektrisches Funktionselement (3, 4, 5) und an deren zweites Ende ein Leiter anschließbar ist, der eine elektrische Verbindung mit zumindest einer elektrischen Funktionseinrichtung des übrigen Kraftfahrzeugs herstellt
**dadurch gekennzeichnet,**
**dass** die elektrisch leitende Steckverbindung (33, 34) zwischen Bordnetz und Trägerelement (3 1 ) derart ausgebildet ist, dass die funktionskomplementären Kontaktierungselemente von Bordnetz und Trägerelement (31) bei lagerichtiger Befestigung des Trägerelements (31) am Spiegelfuß (32) elektrisch leitend aneinander zur Anlage bringbar sind, wobei die Leiterbahn (6) zumindest bereichsweise in den Werkstoff des Trägerelements (1) eingebettet ist, und wobei die Leiterbahn (6) aus einem im wesentlichen biegesteifen Drahtmaterial hergestellt ist.

2. Außenrüchspiegel nach Anspruch 1,
**dadurch gekennzeichnet,**
**dass** das erste Ende (7) und/oder das zweite Ende (19) der Leiterbahn (6) als Steckkontakt, insbesondere als Steckzunge, ausgebildet ist.

3. Außenrüchspiegel nach Anspruch 1 oder 2,
**dadurch gekennzeichnet,**
**dass** das Trägerelement (1) durch Spritzguß herstellbar ist, wobei die Leiterbahnen (6) vor dem Einspritzen des Kunststoffs in das Formnest eingelegt werden.

4. Außenrüchspiegel nach einem der Ansprüche 1 bis 3,
**dadurch gekennzeichnet,**
**dass** die Leiterbahn einen profilierten oder hohlen Leitungsquerschnitt aufweist.

5. Außenrüchspiegel nach einem der Ansprüche 1 bis 4,
**dadurch gekennzeichnet,**
**dass** das elektrische Funktionselement (3, 4) zumindest ein zum ersten Ende (13, 14, 15, 17) einer Leiterbahn (6) funktionskomplementär gestaltetes Kontaktierungselement (8, 9, 10, 18) aufweist, wobei das Kontaktierungselemente (8, 9, 10, 18) derart angeordnet ist, dass bei lagerichtiger Befestigung des elektrischen Funktionselements (3, 4) am Trägerelement ( 1 ) das Kontaktierungselement (8, 9, 10, 18) am Ende der Leiterbahn (13, 14, 15, 17) elektrisch leitend zur Anlage bringbar ist.

6. Außenrüchspiegel nach einem der Ansprüche 1 bis 5,
**dadurch gekennzeichnet,**
**dass** die zweiten Enden (19) mehrerer Leiterbahnen (6) derart am Trägerelement (1) angeordnet sind, dass die Kontaktierungselemente eines mehrpoligen Steckverbinders (20) jeweils am zweiten Enden (19) einer Leiterbahn zur Anlage bringbar sind.

7. Außenrüchspiegel nach einem der Ansprüche 1 bis 6,
**dadurch gekennzeichnet,**
**dass** an zumindest ein Ende der Leiterbahn ein flexibles Stromkabel angeschlossen ist, wobei die Kontaktstelle zwischen Leiterbahn und Stromkabel in das Material des Trägerelements eingebettet ist.

8. Außenrüchspiegel nach Anspruch 7,
**dadurch gekennzeichnet,**
**dass** mehrere mit den Leiterbahnen verbundenen Stromkabel einen Kabelsatz bilden, an dessen Ende ein mehrpoliger Steckverbinder zur Kontaktierung der Stromkabel mit dem Bordnetz angeordnet ist.

9. Außenrüchspiegel nach einem der Ansprüche 1 bis 8,
**dadurch gekennzeichnet,**
**dass** die elektrisch leitende Steckverbindung zwischen Bordnetz und Trägerelement in einer Ausnehmung des Spiegelfußes angeordnet ist.

10. Außenrüchspiegel nach einem der Ansprüche 1 bis 9,
**dadurch gekennzeichnet,**
**dass** zumindest eine Leiterbahn verzweigt ausgebildet ist, so dass zumindest zwei Funktionselemente gemeinsam über diese Leiterbahn an das Bordnetz des Kraftfahrzeugs anschließbar sind.

11. Außenrüchspiegel nach einem der Ansprüche 1 bis 10,
**dadurch gekennzeichnet,**
**dass** zwei verzweigt ausgebildet Leiterbahn vorgesehen sind, die zumindest zwei Funktionselemente im Rückspiegel mit einer Multiplex-Signalsteuerung des Kraftfahrzeugs verbinden.

12. Außenrüchspiegel nach einem der Ansprüche 1 bis 11,
**dadurch gekennzeichnet,**
**dass** das Trägerelement (1) als zentraler Funktionsträger (2) ausgebildet ist, der am Spiegelfuß befestigbar ist.

13. Außenrüchspiegel nach einem der Ansprüche 1 bis 12,
**dadurch gekennzeichnet,**
**dass** das Trägerelement als Teil des Spiegelgehäuses oder Rumpfspiegel ausgebildet ist.

## Claims

1. External rear-view mirror of a motor vehicle, having a glass subassembly, at least one electric operating element (3, 4, 5), more particularly an adjusting drive (3) and/or an electro-optical element and/or a lighting arrangement (4) and/or a folding-in drive (5) and/or a heating element, and a carrier element (31) to which the electric operating element (3, 4, 5) can be fastened, wherein the carrier element (31) has at least one electrical conductor track (6), to whose first end an electric operating element (3, 4, 5) can be connected and to whose second end a conductor can be connected which produces an electrical connection with at least one electrical operating arrangement belonging to the rest of the motor vehicle,
**characterised in that**
the electrically conductive plug connection (33, 34) between the power supply and the carrier element (31) is constructed in such a manner that those contact-making elements of the power supply and the carrier element (31) which are complementary in function can be brought into electrically conductive contact against one another when the carrier element (31) is fastened to the mirror base (32) in the correct location, the conductor track (6) being embedded in the material of the carrier element (1), at least in certain regions, and the conductor track (6) being manufactured from a wire material which is substantially resistant to bending.

2. External rear-view mirror according to claim 1,
**characterised in that** the first end (7) and/or the second end (19) of the conductor track (6) is/are constructed as a plug contact, more particularly as a plug tongue.

3. External rear-view mirror according to claim 1 or 2,
**characterised in that**
the carrier element (1) can be manufactured by injection moulding, the conductor tracks (6) being laid in the mould cavity prior to the injection of the plastics material.

4. External rear-view mirror according to one of claims 1 to 3,
**characterised in that**
the conductor track has a profiled or hollow wire cross-section.

5. External rear-view mirror according to one of claims 1 to 4,
**characterised in that**
the electric operating element (3, 4) has at least one contact-making element (8, 9, 10, 18) designed so as to be complementary in function to the first end (13, 14, 15, 17) of a conductor track (6), the contact-making element (8, 9, 10, 18) being arranged in such a manner that, when the electric operating element (3, 4) is fastened to the carrier element (1) in the correct location, said contact-making element (8, 9, 10, 18) can be brought into electrically conductive contact against the end of the conductor track (13, 14, 15, 17).

6. External rear-view mirror according to one of claims 1 to 5,
**characterised in that**
the second ends (19) of a plurality of conductor tracks (6) are arranged on the carrier element (1) in such a manner that the contact-making elements of a multiple-pole plug connector (20) can be brought into contact against the second end (19) of a conductor track in each case.

7. External rear-view mirror according to one of claims 1 to 6,
**characterised in that**
a flexible current cable is connected to at least one end of the conductor track, the contact point between the conductor track and the current cable being embedded in the material of the carrier element.

8. External rear-view mirror according to claim 7,
**characterised in that**
a plurality of current cables connected to the conductor tracks form a cable loom at whose end a multiple-pole plug connector for making contact between the current cables and the power supply is arranged.

9. External rear-view mirror according to one of claims 1 to 8,
**characterised in that**
the electrically conductive plug connection between the power supply and the carrier element is arranged in a recess in the mirror base.

10. External rear-view mirror according to one of claims 1 to 9,
**characterised in that**
at least one conductor track is of branched construction, so that at least two operating elements can be connected jointly to the power supply of the motor vehicle via said conductor track.

11. External rear-view mirror according to one of claims 1 to 10,
**characterised in that**
two conductor tracks of branched construction are provided, which connect at least two operating elements in the rear-view mirror to a multiplex signal-control system belonging to the motor vehicle.

12. External rear-view mirror according to one of claims 1 to 11,
**characterised in that**
the carrier element (1) is constructed as a central function-carrier (2) which can be fastened to the mirror base.

13. External rear-view mirror according to one of claims 1 to 12,
**characterised in that**
the carrier element is constructed as part of the mirror housing or body mirror.

## Revendications

1. Rétroviseur extérieur d'un véhicule à moteur, comprenant un ensemble en verre, au moins un élément fonctionnel électrique (3, 4, 5), en particulier un entraînement d'ajustage (3) et/ou un élément électro-optique et/ou un dispositif d'éclairage (4) et/ou un entraînement de rabattement (5) et/ou un élément chauffant, et un élément de support (31) sur lequel l'élément fonctionnel électrique (3, 4, 5) est apte à être fixé, l'élément de support (31) comprenant au moins une piste conductive (6) dont une première extrémité est raccordable à un élément fonctionnel électrique (3, 4, 5) et dont une seconde extrémité est raccordable à un conducteur qui établit une connexion électrique avec au moins un dispositif électrique fonctionnel du véhicule à moteur,
**caractérisé en ce que** la connexion par enfichage (33, 34) électriquement conductrice entre le réseau de bord et l'élément de support (31) est aménagée de telle façon que les éléments de contact fonctionnellement complémentaires du réseau de bord et de l'élément de support (31) peuvent être mis en contact conducteur électriquement l'un avec l'autre lorsque l'élément de support (31) est fixé dans une position correcte sur le pied du rétroviseur (32), la piste conductive (6) étant au moins par parties noyée dans le matériau de l'élément de support (31), et la piste conductive (6) étant fabriquée à partir d'un matériau de fil métallique essentiellement résistant à la flexion.

2. Rétroviseur extérieur selon la revendication 1, **caractérisé en ce que** la première extrémité (7) et/ou la seconde extrémité (19) de la piste conductive (6) est sous forme de contact enfichable, en particulier en forme de languette enfichable.

3. Rétroviseur extérieur selon la revendication 1 ou 2, **caractérisé en ce que** l'élément de support (1) peut être fabriqué par injection, les pistes conductives (6) étant insérées dans le moule avant l'injection de la matière plastique.

4. Rétroviseur extérieur selon l'une des revendications 1 à 3, **caractérisé en ce que** la piste conductive présente une section de conduite profilée ou creuse.

5. Rétroviseur extérieur selon l'une des revendications 1 à 4, **caractérisé en ce que** l'élément fonctionnel électrique (3, 4) comporte au moins un élément de mise en contact (8, 9, 10, 18) étant fonctionnellement complémentaire à la première extrémité (13, 14, 15, 17) d'une piste conductive (6), l'élément de mise en contact (8, 9, 10, 18) étant disposé de telle façon que l'élément de mise en contact (8, 9, 10, 18) peut être mis en contact électriquement conducteur à l'extrémité de la piste conductive (13, 14, 15, 17) lorsque l'élément fonctionnel électrique (3, 4) est fixé dans une position correcte sur l'élément de support (1).

6. Rétroviseur extérieur selon l'une des revendications 1 à 5, **caractérisé en ce que** les secondes extrémités (19) de plusieurs pistes conductives (6) sont disposées sur l'élément de support (1) de telle façon que les éléments de mise en contact d'un connecteur multibroches (20) peuvent être mis en contact avec les secondes extrémités (19) d'une piste conductive.

7. Rétroviseur extérieur selon l'une des revendications 1 à 6, **caractérisé en ce qu'**un câble électrique flexible est connecté à au moins une extrémité de la piste conductive, l'endroit de contact entre la piste conductive et le câble de courant étant noyé dans le matériau de l'élément de support.

8. Rétroviseur extérieur selon la revendication 7, **caractérisé en ce que** plusieurs câbles de courant connectés aux pistes conductives forment un jeu de câbles, à l'extrémité duquel un connecteur multibroches est disposé pour établir un contact entre les câbles de courant et le réseau de bord.

9. Rétroviseur extérieur selon l'une des revendications 1 à 8, **caractérisé en ce que** la connexion par enfichage électriquement conductrice entre le réseau de bord et l'élément de support est disposée dans un évidement du pied du rétroviseur.

10. Rétroviseur extérieur selon l'une des revendications 1 à 9, **caractérisé en ce qu'**au moins une piste conductive est ramifiée de sorte que deux éléments fonctionnels au moins peuvent être raccordés ensemble par cette piste conductive au réseau de bord du véhicule à moteur.

11. Rétroviseur extérieur selon l'une des revendications 1 à 10, **caractérisé en ce que** deux pistes conductives ramifiées sont prévues qui relient au moins deux éléments fonctionnels dans le rétroviseur à une commande de signal de multiplexage du véhicule à moteur.

12. Rétroviseur extérieur selon l'une des revendications 1 à 11, **caractérisé en ce que** l'élément de support (1) est agencé sous forme de support fonctionnel central (2) apte à être fixé au pied du rétroviseur.

13. Rétroviseur extérieur selon l'une des revendications 1 à 12, **caractérisé en ce que** l'élément de support est agencé sous forme d'une partie de boîtier de miroir ou sous forme de miroir tronqué.
